# EUROPÄISCHE PATENTSCHRIFT

(11) **EP 1 742 732 B1**
(45) Veröffentlichungstag und Bekanntmachung des Hinweises auf die Patenterteilung: **11.04.2012**
(21) Anmeldenummer: 05739470.2
(22) Anmeldetag: 06.05.2005
(51) Int. Cl.: B01J 19/00

(54) **MIKROFLUIDIKSYSTEM**
MICRO-FLUIDIC SYSTEM
SYSTÈME MICROFLUIDIQUE

(30) Priorität: 06.05.2004 DE 102004022423
(43) Veröffentlichungstag der Anmeldung: 17.01.2007
(73) Patentinhaber: SIEMENS AKTIENGESELLSCHAFT, 80333 München (DE)
(72) Erfinder: FEHM, Udo, 90765 Fürth (DE); LOHF, Astrid, 91056 Erlangen (DE); RUHL, Hermann, 91459 Markt Erlbach (DE); SCHNEEBERGER, Reinhold, 90556 Seukendorf (DE); SIPPL, Johann, 90480 Nürnberg (DE); WENZEL, Waldemar, 90766 Fürth (DE)
(86) Internationale Anmeldenummer: PCT/EP2005/004951
(87) Internationale Veröffentlichungsnummer: WO 2005/107937

(56) Entgegenhaltungen:
- WO-A-01/09598
- WO-A-03/076063
- WO-A-2004/011134
- DE-A1- 19 917 398
- QUIRAM D J ET AL: "PACKAGE LEVEL INTEGRATION OF SILICON MICROFABRICATED REACTORS TO FORM A MINIATURE REACTOR TEST SYSTEM" TECHNICAL DIGEST, IEEE SOLID-STATE SENSOR & ACTUATOR WORKSHOP, NEW YORK, NY, US, 2000, Seiten 166-169, XP008031381

## Beschreibung

Die Erfindung betrifft ein Mikrofluidiksystem, wie es gleichermaßen aus der WO 01/36085 A1, der WO 01/73823 A2 und aus der WO 02/065221 A2 bekannt ist. Die bekannten Mikrofluidiksysteme bestehen aus mehreren Modulen, die jeweils eine Mikrofluidikeinheit und eine zugehörige elektrische Steuereinheit enthalten und an ihren Rückseiten an einer Tragschiene in Reihe nebeneinander montierbar sind. Die Steuereinheiten der unterschiedlichen Module sind über einen elektrischen Leitungsbus und die Mikrofluidikeinheiten über einen Fluidbus miteinander verbunden. Wie die WO 02/065221 A2 zeigt, kann der Fluidbus dadurch gebildet werden, dass die Mikrofluidikeinheiten jeweils benachbarter Module über Verbindungskanäle enthaltende und die betreffenden Module überbrückende Verbindungsteile miteinander verbunden werden.

Die DE 199 17 398 A1 offenbart ein Mikrofluidiksystem, bei dem eine Reihe von nebeneinander stehenden Modulen auf einer Kopplungsschiene montiert ist, die sowohl einen elektrischen Leitungsbus zur elektrischen Verbindung von moduleigenen Steuereinheiten als auch Verbindungskanäle zur fluidischen Verbindung von moduleigenen Mikrofluidikeinheiten enthält.

Aus Quiram D.J. et al.: "Package Level Integration of Silicon Microfabricated Reactors to Form a Miniature Reactor Test System", Technical Digest, IEEE Solid State Sensor and Actuator Workshop, New York, 2000, Seiten 166-169 ist ein modulares Mikrofluidiksystem bekannt, bei dem elektronische Baugruppen in einem Baugruppenträger eingeschoben und darin über einen Rückwandbus miteinander elektrisch verbunden sind. Auf den einzelnen Baugruppen sind Mikrofluidikeinheiten, hier Reaktoren, in Fassungen mit elektrischen und fluidischen Anschlüssen gehalten. Die Mikrofluidikeinheiten werden durch elektrische Steuereinheiten auf den Baugruppen gesteuert. Die Baugruppen weisen auf ihren Vorderseiten Fluidanschlüsse auf, über die sie nach außen und untereinander fluidisch verbindbar sind.

Je nach Anforderung müssen die Mikrofluidikeinheiten gekühlt oder beheizt werden, um beispielsweise im Falle einer chemischen Reaktion von Fluiden in einem Mikroreaktor die Reaktionstemperatur einzustellen bzw. die bei der Reaktion frei werdende Wärme abzuführen. Die elektrischen Steuereinheiten sind einerseits wärmeempfindlich und erzeugen andererseits selbst Abwärme.

Das erfindungsgemäße Mikrofluidiksystem besteht nun aus in einer Reihe nebeneinander angeordneten Modulen, die jeweils eine Mikrofluidikeinheit und eine zugehörige, modulspezifische Funktionen in der Mikrofluidikeinheit steuernde und Messwerte erfassende elektrische Steuereinheit enthalten,
- wobei die Module mit ihren Rückseiten an einer gemeinsamen senkrechten Rückwandeinheit anliegen und an dieser gehalten sind,
- wobei in den Modulen die jeweilige Steuereinheit im Bereich der Rückseite und die Mikrofluidikeinheit in einem von der Rückseite entfernten Bereich angeordnet ist,
- wobei die Steuereinheiten über an den Rückseiten der Module und an der Rückwandeinheit angeordnete elektrische Steckverbinderteile mit einem in der Rückwandeinheit verlaufenden elektrischen Leitungsbus verbunden sind und
- wobei die Mikrofluidikeinheiten in den unterschiedlichen Modulen mit jeweils einer Fluidanschlüsse enthaltenden Seite nebeneinander in einer gemeinsamen Ebene liegen und Verbindungskanäle enthaltende Verbindungsteile in dieser Ebene an den Mikrofluidikteilen anliegen, wobei jeweils zwei benachbarte Mikrofluidikteile von jeweils einem Verbindungsteil teilweise überlappt werden und das Verbindungsteil die in dem Überlappungsbereich liegenden Fluidanschlüsse der benachbarten Mikrofluidikteile über seine Verbindungskanäle miteinander verbindet.

Da die elektrischen Steuereinheiten im rückseitigen Bereich der Module angeordnet sind, kann die von den Steuereinheiten erzeugte Abwärme effektiv über die zur Halterung der Module dienende Rückwandeinheit abgeführt werden. Die Nähe der Steuereinheiten zu der Rückwandeinheit wird dabei genutzt, den die Steuereinheiten verbindenden elektrischen Leitungsbus, also die Daten- und Energieversorgungsleitungen, in die Rückwandeinheit zu verlegen, wobei die Verbindung zwischen den Steuereinheiten und dem Leitungsbus über Steckverbinderteile erfolgt. Da der Leitungsbus nicht abschnittsweise in den Modulen verläuft, sondern von diesen getrennt ist, ist die Anzahl der benötigten und insbesondere der in Reihe liegenden elektrischen Steckverbinder minimiert. Die Mikrofluidikeinheiten sind wärmemäßig von den elektrischen Steuereinheiten entkoppelt, indem sie in einem von der Rückseite entfernten Bereich, beispielsweise der Vorder- oder Oberseite der Module, angeordnet sind und dort mittels der die jeweils benachbarten Module überbrückenden Verbindungsteile fluidisch verbindbar sind. Bei Anordnung im Bereich der Vorder- oder Oberseite der Module sind die Mikrofluidikeinheiten außerdem leicht zugänglich und können, beispielsweise im Fehler- oder Verschleißfall, leicht ausgetauscht werden. Das Mikrofluidiksystem kann zusätzliche Module ohne Fluideinheiten, wie z. B. Energie- oder Druckversorgungsmodule, oder Module ohne Steuereinheiten, wie z. B. Fluidver- oder entsorgungsbehälter, enthalten, die in gleicher Weise, wie die übrigen Module, an der Rückwandeinheit gehalten sind.

Zur Reduzierung des schaltungstechnischen Aufwandes sind die Steuereinheiten in den Modulen nur zur Ausübung modulspezifischer Funktionen ausgebildet, wobei darüber hinaus gehende, modulübergreifende Funktionen durch eine zusätzliche Steuereinheit ausgeübt werden, die in der Rückwandeinheit integriert oder an dieser, beispielsweise in Form eines zusätzlichen Moduls, gehalten ist.

Vorzugsweise sind die Mikrofluidikeinheiten im Bereich der Oberseite der jeweiligen Module angeordnet, so dass weitere mikrofluidische oder makrofluidische Einheiten, wie z. B. Pumpen, Ventile usw., unterhalb der betreffenden Mikrofluidikeinheit in dem Modul angeordnet und mit der Mikrofluidikeinheit fluidisch verbunden werden können. Es ist aber auch möglich, bei Anordnung der Mikrofluidikeinheiten an der Vorder- oder Oberseite der Module die weiteren mikro- oder makrofluidischen Einheiten von außen an den Modulen zu montieren und dabei mit den Mikrofluidikeinheiten zu verbinden.

Die Mikrofluidikeinheiten in den unterschiedlichen Modulen liegen mit jeweils einer Fluidanschlüsse enthaltenden Seite nebeneinander in einer gemeinsamen Ebene, wobei die Verbindungsteile in dieser Ebene derart an den Mikrofluidikteilen anliegen, dass jeweils zwei benachbarte Mikrofluidikteile von jeweils einem Verbindungsteil teilweise überlappt werden und dass das Verbindungsteil die in dem Überlappungsbereich liegenden Fluidanschlüsse der benachbarten Mikrofluidikteile über seine Verbindungskanäle miteinander verbindet. Die Fluidverbindung erfolgt somit unmittelbar über die Fluidanschlüsse in den Mikrofluidikteilen und die Verbindungskanäle in den daran anliegenden Verbindungsteilen, wobei im Bereich der Fluidanschlüsse gegebenenfalls lediglich Dichtungsmittel, wie z. B. Dichtringe, erforderlich sind, um das System nach außen hin abzudichten. Schlauchleitungen zwischen den Mikrofluidikteilen werden auf diese Weise vermieden, so dass die Fluide nur in den Kanälen der Mikrofluidikteile und der Verbindungsteile geführt werden. Außerhalb der Überlappungsbereiche können die Mikrofluidikeinheiten weitere Fluidanschlüsse zum Anschluss beispielsweise der bereits erwähnten weiteren mikrofluidischen oder makrofluidischen Einheiten aufweisen.

Die Mikrofluidikeinheiten sind als planare Mikrofluidikteile, beispielsweise als Einzelplatte oder in Form eines Plattenverbunds aus Stahl, Glas, Silizium oder einem anderen geeigneten Material, ausgebildet. Innerhalb der Platte bzw. den Platten verlaufen Fluidkanäle im Wesentlichen parallel zu den beiden großflächigen Plattenhauptseiten und sind dazu senkrecht mit den Fluidanschlüssen und gegebenenfalls weiteren Fluidanschlüssen in einer der beiden oder beiden außen liegenden Plattenhauptseiten verbunden. Der Plattenverbund kann auch in der Weise aufgebaut sein, dass auf einer Fluidverteilerplatte, welche auch die Fluidanschlüsse zur Verbindung mit den benachbarten Mikrofluidikeinheiten enthält, die eigentliche Mikrofluidikeinheit oder auch mehrere Mikrofluidik-Untereinheiten neben- oder übereinander aufgebracht sind. Die Verbindungsteile sind vorzugsweise ebenfalls als Platten und aus demselben Material wie die planaren Mikrofluidikteile ausgebildet, so dass die Bildung von elektrischen Lokalelementen verhindert wird.

Die Verbindungsteile können unmittelbar an den nebeneinander liegenden Modulen gehalten werden, wobei sie mit ihren die Fluidanschlüsse enthaltenden Seiten nach außen gewandt in einer gemeinsamen Ebene zu liegen kommen. Die Mikrofluidikeinheiten werden dann von außen gegen die Verbindungsteile montiert, so dass sie an diesen unter Druck anliegen. Dies ist insbesondere dann von Vorteil, wenn die Mikrofluidikeinheiten zerbrechlich sind und nur eine gleichmäßig verteilte Druckbelastung vertragen oder wenn die Mikrofluidikeinheiten in den unterschiedlichen Modulen unterschiedliche Bauhöhen aufweisen; die Verbindungsteile definieren dann mit ihren nach außen gewandten Seiten eine Referenzebene für die aufliegenden Mikrofluidikeinheiten.

Ist die Druckbeaufschlagung der Mikrofluidikeinheiten, wie z. B. bei planaren Teilen aus Stahl oder exakt planaren Glasteilen mit geringen Fertigungstoleranzen, unkritisch, so können die Mikrofluidikeinheiten unmittelbar an den Modulen gehalten werden, wobei dann die Verbindungsteile von außen gegen die Mikrofluidikeinheiten montierbar sind. Dies hat den Vorteil, dass die Mikrofluidikeinheiten in den Modulen eingebaut werden können bevor diese an der Rückwandeinheit befestigt und die Verbindungsteile zwischen jeweils benachbarten Modulen montiert werden. Wenn ein Modul in dem System ausgewechselt werden soll, muss daher auch nicht zuerst die Mikrofluidikeinheit aus dem betreffenden Modul entfernt werden.

Die weisen Module bevorzugt betätigbare Verriegelungsteile, beispielsweise Deckelteile, auf, die im Verriegelungszustand bzw. in geschlossenem Zustand die von außen montierbaren Mikrofluidikeinheiten bzw. Verbindungsteile gegen die unmittelbar an den Modulen gehaltenen Mikrofluidikeinheiten bzw. Verbindungsteile pressen. Der Anpressdruck kann dabei unmittelbar oder bevorzugt über elastische Andruckelemente, wie Federbeine, pneumatisch betätigbare Stempel, oder über flüssigkeits- oder gasgefüllte Kissen ausgeübt werden, was insbesondere auch dann von Vorteil ist, wenn die anzudrückenden Teile aus herstellungstechnischen Gründen nicht exakt planar ausgerichtet werden können, so dass eine gleichmäßige Druckbeaufschlagung mittels Schraubverbindungen oder anderer Andruckelemente nicht realisierbar ist.

Neben dem elektrischen Leitungsbus enthält die Rückwandeinheit, an der die Module montiert sind, vorzugsweise mindestens eine Fluidleitung, die mindestens ein Hilfsfluid führt, wie z. B. ein Kühl- oder Heizfluid zum Temperieren der Mikrofluidikeinheiten in den Modulen, Druckluft zum Betätigen von pneumatischen Stellgliedern in den Modulen, ein Reinigungsfluid zum Spülen der Fluidkanäle in den Mikrofluidikeinheiten oder ein Spülgas zum Austreiben entzündlicher Gasgemische aus den Modulen. Die Module sind dabei an ihren Rückseiten über entsprechende fluidische Steckverbinderteile mit der mindestens einen Fluidleitung in der Rückwandeinheit verbindbar.

Zur besseren Abfuhr der von den elektrischen Steuereinheiten in den Modulen erzeugten Wärme kann die Rückwandeinheit in vorteilhafter Weise in ihrem den Steuereinheiten in den Modulen gegenüberliegenden Bereich Mittel zur Zwangskühlung aufweisen, wie z. B. eine von einem Kühlmittel durchflossene Kühlschlange, einen Lüfter oder Peltier-Elemente.

Der Wärmeübergang von den elektrischen Steuereinheiten in den Modulen auf die Rückwandeinheit lässt sich dadurch verbessern, dass die Steuereinheiten in den Modulen jeweils auf einem Wärmeleitkörper montiert werden, der mit einer Wärmeübertragungsfläche, gegebenenfalls unter Zwischenlage eines Wärmeleitgummis oder ähnlichem, flächig an der Rückwandeinheit anliegt.

Ein Einsatz des erfindungsgemäßen Mikrofluidiksystems in explosionsgefährdeten Bereichen wird in vorteilhafter Weise dadurch ermöglicht, dass die Rückseiten der Module jeweils mindestens eine Ausnehmung enthalten, die zusammen mit der Rückwandeinheit einen nach außen abgedichteten Hohlraum bildet, in dem die elektrischen Steckverbinderteile zu liegen kommen. Dabei können zusätzlich auch die elektrische Steuereinheit und gegebenenfalls die fluidischen Steckverbinderteile innerhalb des jeweiligen Hohlraums angeordnet sein. Im Weiteren kann in der Rückwandeinheit eine Fluidleitung für ein Spülfluid vorgesehen werden, wobei von der Fluidleitung Abzweige in die Hohlräume führen, so dass diese von dem Spülfluid durchströmt werden. Das Spülfluid verhindert das Eindringen von Luft (Sauerstoff) von außen in die Hohlräume bzw. verdünnt und entfernt in den Hohlräumen vorhandene entzündliche Gasgemische. Außerdem bewirkt das Spülfluid eine unmittelbare Kühlung der Steckverbinder und der elektrischen Steuereinheiten.

Die einzelnen Module können auf unterschiedliche Weise an der Rückwandeinheit gehalten werden. Vorzugsweise werden sie an der Rückwandeinheit angehängt, wozu die Module im oberen Bereich ihrer Rückseiten Mittel zum Einhängen in eine Einhängvorrichtung, z. B. Montageschiene, im oberen Bereich der Rückwandeinheit aufweisen. Auf diese Weise lassen sich auch schwere Module einfach und sicher an der Rückwandeinheit befestigen. Zur Fixierung der Module weisen diese im unteren Bereich ihrer Rückseiten vorzugsweise Mittel, wie z. B. Schraub- oder Schnappverbindungen oder sonstige Verriegelungseinrichtungen, auf, um die Module mit ihren Rückseiten gegen die Rückwandeinheit zu pressen und so die Wärmeableitung von den Steuereinheiten in den Modulen auf die Rückwandeinheit bzw. die Abdichtung der die elektrischen Steckverbinderteile aufnehmenden Hohlräume zu verbessern.

Um die Modularität des erfindungsgemäßen Mikrofluidiksystems zu erhöhen und beispielsweise auch Subsysteme bilden und miteinander verbinden zu können, ist die Rückwandeinheit in vorteilhafter Weise aus Rückwandsegmenten zusammenfügbar, die an den Fügestellen Verbindungsanschlüsse für die in den Rückwandsegmenten enthaltenen Leitungsbussegmente und gegebenenfalls Fluidleitungssegmente aufweisen. Die Rückwandsegmente weisen jeweils eine vorgegebene Anzahl von Montageplätzen für die Module auf und erlauben es, Rückwandeinheiten beliebiger Länge zu bilden.

Wie bereits erwähnt, können Zusatzeinrichtungen, insbesondere makrofluidische Einheiten, wie z. B. Pumpen, Ventile usw., innerhalb der Module angeordnet werden. Soweit diese in den einzelnen Modulen keinen Platz mehr finden oder nicht modulspezifische, sondern übergeordnete Funktionen wahrnehmen, wie z. B. bei übergeordneten Einheiten für die Prozessüberwachung oder beispielsweise Druckerzeuger für Hilfsfluide (z. B. Druckluft), kann vorgesehen werden, dass die Rückwandeinheit auf ihrer von den Modulen abgewandten Seite Montageplätze mit Anschlüssen zur Montage und zum Anschließen dieser Zusatzeinrichtungen aufweist.

Zur weiteren Erläuterung der Erfindung wird im Folgenden auf die Figuren der Zeichnung Bezug genommen; im Einzelnen zeigen:
- Figur 1: ein erstes Ausführungsbeispiel für ein an einer Rückwandeinheit gehaltenes Modul in Seitenansicht,
- Figur 2: eine Rückansicht des Moduls,
- Figur 3: eine Vorderansicht des Moduls an der Rückwandeinheit zusammen mit einem weiteren benachbarten Modul,
- Figur 4: die Oberseite des Moduls,
- Figur 5: ein weiteres Ausführungsbeispiel für das Modul,
- Figur 6: ein Beispiel für die Montage der Verbindungsteile bei dem Ausführungsbeispiel nach Figur 5,
- Figur 7: ein alternatives Ausführungsbeispiel für die Rückwandeinheit,
- Figur 8: ein Beispiel für die Montage der Mikrofluidikeinheiten und Verbindungsteile an der Vorderseite der Module und
- Figur 9: noch ein Beispiel für das Modul.

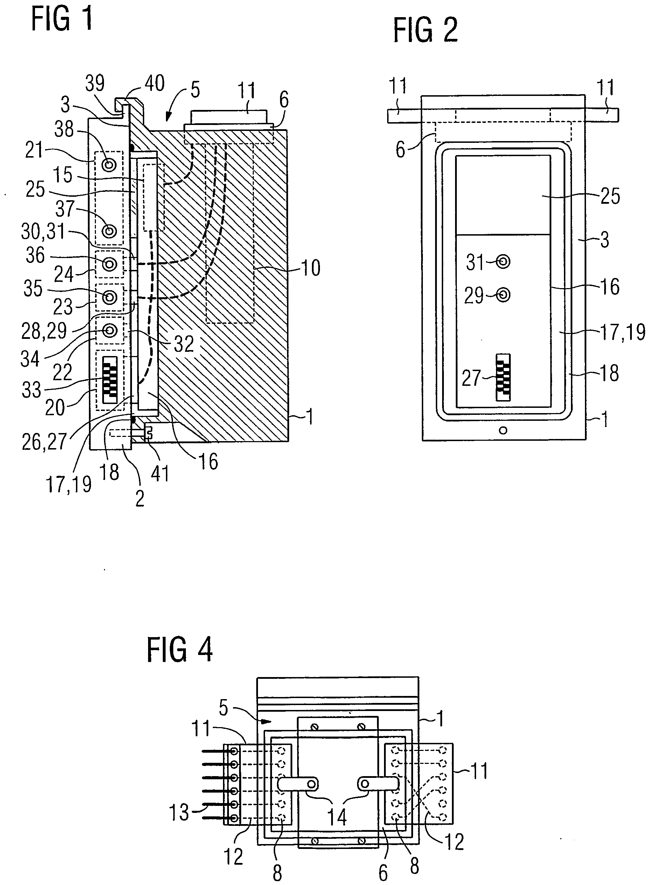

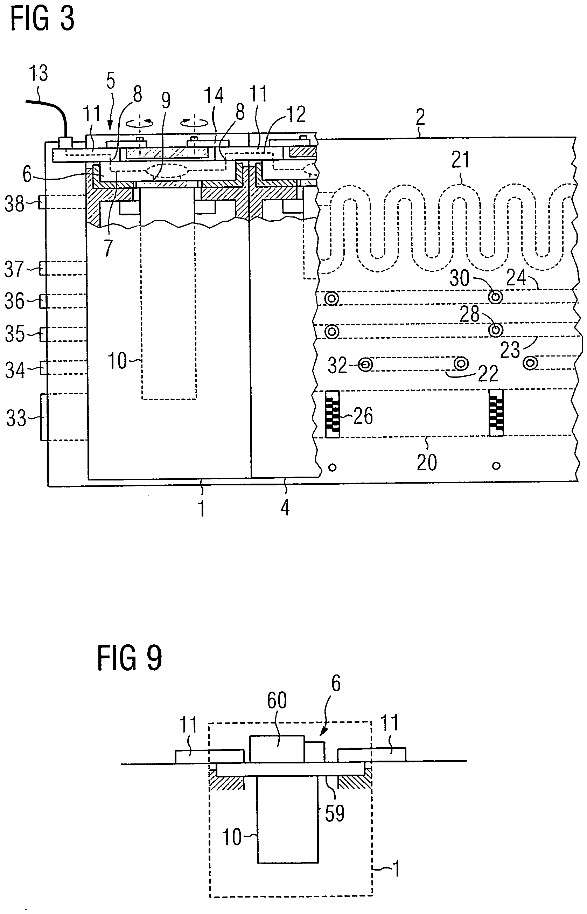

Figur 1 zeigt in Seitenansicht ein Modul 1, das an einer Rückwandeinheit 2 gehalten ist und mit seiner Rückseite 3 an dieser anliegt. Figur 2 zeigt eine Rückansicht und Figur 3 eine Vorderansicht des Moduls 1, welches zusammen mit weiteren Modulen 4 in einer Reihe nebeneinander an der Rückwandeinheit 2 gehalten ist. Die Oberseite 5 des Moduls 1 ist in Figur 4 dargestellt.

Das Modul 1 enthält eine Mikrofluidikeinheit 6, hier in Form eines planaren Mikrofluidikteils, das im Bereich der Oberseite 5 des Moduls 1 parallel zu dieser angeordnet und gehalten ist. Das Mikrofluidikteil 6 enthält in seinem Inneren Fluidkanäle 7, die je nach Funktion des Moduls 1 beispielsweise einen Reaktor, einen Mischer oder eine Verweilstrecke für Fluide oder mehrere solche Funktionseinheiten bilden und im Wesentlichen parallel zu den beiden großflächigen Hauptzeiten des planaren Mikrofluidikteils 6 verlaufen. Diejenigen Fluidkanäle 7, die zur Verbindung mit Fluidkanälen in den Mikrofluidikteilen benachbarter Module, hier z. B. das Modul 4, vorgesehen sind, münden in Fluidanschlüssen 8, die auf der nach oben gewandten Hauptseite des Mikrofluidikteils 6 in zu den benachbarten Modulen nahen Bereichen enthalten sind. Weitere Fluidanschlüsse 9 auf der nach unten gewandten Hauptseite des Mikrofluidikteils 6 dienen zum Anschluss weiterer mikrofluidischer oder makrofluidischer Einheiten, hier z. B. einer Pumpe 10. Diese weiteren mikro- oder makrofluidischen Einheiten 10 sind innerhalb des Moduls 1 in einem Raum unter dem Mikrofluidikteil 6 untergebracht.

Die Mikrofluidikteile 6 der jeweils benachbarten Module 1 und 4 sind über Verbindungsteile 11 mit darin enthaltenen Verbindungskanälen 12 miteinander fluidisch verbunden. Die Verbindungsteile 11 sind dazu von außen gegen die Mikrofluidikteile 6 montierbar, wobei sie jeweils die Mikrofluidikteile 6 der unmittelbar benachbarten Module 1 und 4 überbrücken und über ihre Verbindungskanäle 12 die Fluidanschlüsse 8 der jeweils benachbarten Mikrofluidikteile 6 miteinander verbinden. Bei Modulen 1, die als Endmodule in der Reihe nur ein Nachbarmodul 4 haben, dient das auf der Seite mit dem fehlenden Nachbarmodul montierte Verbindungsteil 11 zum Anschluss externer Fluidleitungen 13 zur Ver- und Entsorgung der Modulreihe mit bzw. von Fluiden. Auf ihrer Oberseite 5 weisen die Module 1, 4 betätigbare Verriegelungsteile 14 auf, mit denen die Verbindungsteile 11 gegen die Mikrofluidikteile 6 gepresst werden.

Wie Figur 1 zeigt, enthält das Modul 1 eine elektrische Steuereinheit 15, die Funktionen, wie z. B. Ventilstellungen oder Analysenvorgänge, in der Mikrofluidikeinheit 6 und/oder den zusätzlichen fluidischen Einheiten 10 steuert, und Messwerte, wie z. B. Temperatur, Druck, Durchfluss oder Analysenergebnisse, von den Einheiten 6 und/oder 10 erfasst. Die Steuereinheit 15 ist in dem Modul 1 an dessen Rückseite 3 angeordnet und so von der Mikrofluidikeinheit 6 thermisch entkoppelt. Bei dem gezeigten Ausführungsbeispiel ist die Steuereinheit 15 auf einem Wärmeleitkörper 16 montiert, der im Bereich der Rückseite 13 des Moduls 1 innerhalb einer Ausnehmung 17 angeordnet ist, wobei die Steuereinheit 15 auch innerhalb der Ausnehmung 17 zu liegen kommen kann. Die Ausnehmung 17 ist von einer Dichtung 18 umgeben und bildet mit der Rückwandeinheit 2, an der das Modul 1 gehalten ist, einen geschlossenen abgedichteten Hohlraum 19.

Die Rückwandeinheit 2 enthält einen elektrischen Leitungsbus 20 mit Daten- und Energieversorgungsleitungen, eine Zwangskühlung 21, hier in Form eines Kühlmittelkreislaufs, sowie mehrere Fluidleitungen 22, 23, 24 zur Führung von Hilfsfluiden, wie z. B. Kühlflüssigkeiten für die Mikrofluidikeinheiten 6, Druckluft zur Steuerung pneumatischer Einheiten 10 oder Spülgas zum Spülen des Hohlraums 19. Die Zwangskühlung 21 ist derart angeordnet, dass sie der elektrischen Steuereinheit 15 in dem Modul 1 direkt gegenüberliegt, so dass die Abwärme der elektrischen Steuereinheit 15 über den Wärmeleitkörper 16 und gegebenenfalls ein Wärmeleitgummi 25 unmittelbar in die Rückwandeinheit 2 mit der dort vorhandenen Zwangskühlung 21 eingeleitet wird. Die elektrische Verbindung zwischen der Steuereinheit 15 und dem elektrischen Leitungsbus 20 erfolgt durch an der Rückwandeinheit 2 und der Rückseite 3 des Moduls 1 angeordnete elektrische Steckverbinderteile 26 und 27. Ebenso erfolgt die fluidische Verbindung zwischen den fluidischen Einheiten 6 und 10 und den Fluidleitungen 23 und 24 durch fluidische Steckverbinderteile 28, 29 bzw. 30, 31. Die Fluidleitung 22 versorgt über einen Abzweig 32 den Hohlraum 19 mit einem Spülgas, so dass in den Hohlraum 19 von außen keine entzündlichen Gasgemische eindringen können. Der elektrische Leitungsbus 20, die Fluidleitungen 22, 23, 24 und der Kühlmittelkreislauf 21 weisen zusätzliche Verbindungsanschlüsse 33 bis 38 an der senkrechten Schmalseite der Rückwandeinheit 2 auf.

Die Rückwandeinheit 2 weist in ihrem oberen Bereich eine Montageschiene 39 auf, an der das Modul 1 mittels einer Einhängvorrichtung 40 eingehängt ist. Zur Fixierung des Moduls 1 und zum Anpressen seiner Rückseite 3 mit dem Wärmeleitkörper 16 und der dem Hohlraum 19 umgebenden Dichtung 18 gegen die Rückwandeinheit 2 ist im unteren Bereich eine Schraubverbindung 41 vorgesehen.

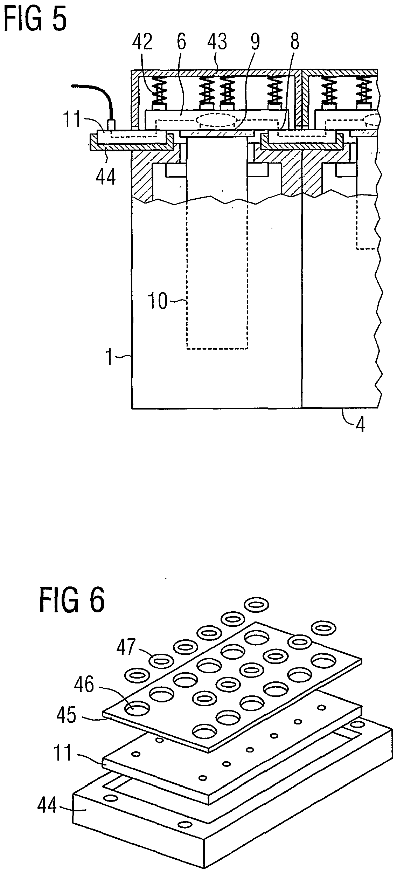

Das in Figur 5 gezeigte Ausführungsbeispiel unterscheidet sich von dem vorangegangenen dadurch, dass nicht das Mikrofluidikteil 6, sondern die Verbindungsteile 11 unmittelbar an dem Modul 1 gehalten sind, wobei die Verbindungsteile 11 mit ihren nach außen, d. h. nach oben, gewandten Hauptseiten eine Referenzebene für die Mikrofluidikteile 6 bilden, welche von außen gegen die Verbindungsteile 11 gepresst werden. Sowohl die für die Verbindung mit den benachbarten Mikrofluidikteilen als auch die zur Verbindung mit den zusätzlichen fluidischen Einheiten 10 dienenden Fluidanschlüsse 8 bzw. 9 liegen auf einer einzigen, nämlich der nach unten gewandten Hauptseite des Mikrofluidikteils 6. Auf der davon abgewandten oberen Hauptseite wird das Mikrofluidikteil 6 an den den Fluidanschlüssen 8 bzw. 9 gegenüberliegenden Stellen über Andruckelemente 42, hier Federbeine, die in einem aufklappund schließbaren Deckelteil 43 des Moduls 1 angeordnet sind, elastisch gegen die Verbindungsteile 11 gepresst.

Figur 6 zeigt ein Beispiel für die Halterung der Verbindungsteile in einem direkt an dem Modul 1 montierbaren Aufnahmeteil 44, wobei auf der den Mikrofluidikteilen 6 zugewandten Oberseite ein Schablonenteil 45 mit den Fluidanschlüssen 8 in dem Mikrofluidikteil 6 gegenüberliegenden Öffnungen 46 zur Aufnahme von Dichtungsringen 47 aufliegt.

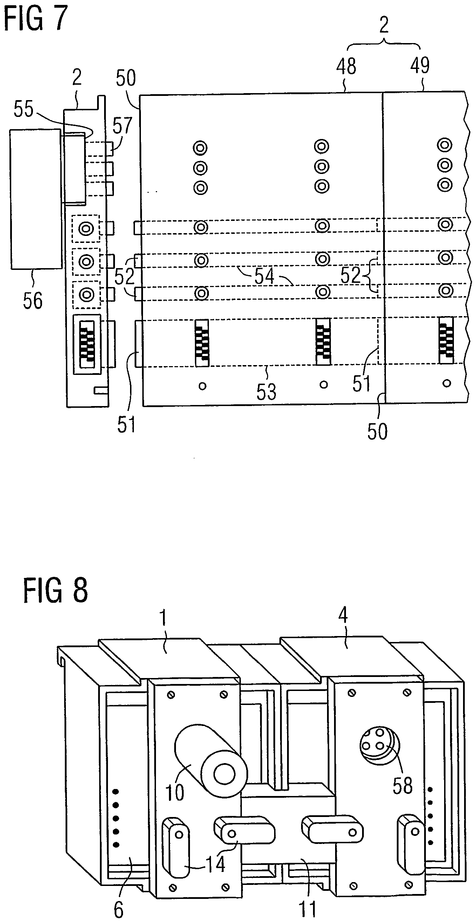

Figur 7 zeigt ein anderes Ausführungsbeispiel für die Rückwandeinheit 2, die aus Rückwandsegmenten 48, 49 zusammengefügt ist. Die Rückwandsegmente 48, 49 weisen an den Fügestellen 50 Verbindungsanschlüsse 51, 52 für die in den Rückwandsegmenten 48, 49 enthaltenen Leitungsbussegmente 53 und Fluidleitungssegmente 54 auf. Zusätzlich weist die Rückwandeinheit 2 auf ihrer von den Modulen abgewandten Seite Montageplätze 55 zum Anbringen von Zusatzeinrichtungen 56, wie z. B. Druckerzeuger für Hilfsfluide, auf, die mit den Leitungen in der Rückwandeinheit 2 oder, wie hier gezeigt, über Anschlüsse 57 in der Rückwandeinheit 2 mit den daran gehaltenen Modulen verbindbar sind.

Figur 8 zeigt ein Ausführungsbeispiel mit zwei Modulen 1 und 4, bei denen die Mikrofluidikteile 6 und die sie verbindenden Verbindungsteile 11 an der Vorderseite der Module 1 und 4 angeordnet sind. Dabei werden in gleicher Weise wie bei dem Ausführungsbeispiel nach Figur 4 die Verbindungsteile 11 mit Hilfe von Verriegelungsteilen 14 von außen gegen die Mikrofluidikteile 6 gepresst. Weitere fluidische Zusatzeinrichtungen 10 können außen an den Modulen 1 und 4 montiert werden, wobei sie über Fluiddurchführungen in einem Dichtungsteil 58 mit dem Mikrofluidikteil 6 fluidisch verbunden werden.

Schließlich zeigt Figur 9 in schematischer Darstellung ein Ausführungsbeispiel, bei dem die Mikrofluidikeinheit 6 unmittelbar in dem Modul 1 gehalten ist und die Verbindungsteile 11 von außen gegen die Mikrofluidikeinheit 11 montierbar sind. Die Mikrofluidikeinheit 6 besteht aus einer Fluidverteilerplatte 59, an deren Oberseite die Verbindungsteile 11 unter Druck anliegen und auf der mehrere Mikrofluidik-Untereinheiten 60 nebeneinander aufgebracht sind. An der Unterseite der Fluidverteilerplatte 59 sind weitere fluidische Zusatzeinrichtungen 10 montierbar.

## Patentansprüche

1. Mikrofluidiksystem, bestehend aus in einer Reihe nebeneinander angeordneten Modulen (1, 4), die jeweils eine Mikrofluidikeinheit (6) und eine zugehörige, modulspezifische Funktionen in der Mikrofluidikeinheit (6) steuernde und Messwerte erfassende elektrische Steuereinheit (15) enthalten,
- wobei die Module (1, 4) mit ihren Rückseiten (3) an einer gemeinsamen senkrechten Rückwandeinheit (2) anliegen und an dieser gehalten sind,
- wobei die Mikrofluidikeinheiten als planare Mikrofluidikteile ausgebildet sind,
- wobei in den Modulen (1, 4) die jeweilige Steuereinheit (15) im Bereich der Rückseite (3) und die Mikrofluidikeinheit (6) in einem von der Rückseite (3) entfernten Bereich angeordnet ist,
- wobei die Steuereinheiten (15) über an den Rückseiten (3) der Module (1, 4) und an der Rückwandeinheit (2) angeordnete elektrische Steckverbinderteile (26, 27) mit einem in der Rückwandeinheit (2) verlaufenden elektrischen Leitungsbus (20) verbunden sind und
- wobei die Mikrofluidikeinheiten (6) in den unterschiedlichen Modulen (1, 4) mit jeweils einer Fluidanschlüsse (8) enthaltenden Seite nebeneinander in einer gemeinsamen Ebene liegen und Verbindungskanäle (12) enthaltende Verbindungsteile (11) in dieser Ebene an den Mikrofluidikteilen (6) anliegen, wobei jeweils zwei benachbarte Mikrofluidikteile (6) von jeweils einem Verbindungsteil (11) teilweise überlappt werden und das Verbindungsteil (11) die in dem Überlappungsbereich liegenden Fluidanschlüsse (8) der benachbarten Mikrofluidikteile (6) über seine Verbindungskanäle (12) miteinander verbindet.

2. Mikrofluidiksystem nach Anspruch 1, **dadurch gekennzeichnet, dass** die Steuereinheiten (15) in den Modulen (1, 4) nur zur Ausübung modulspezifischer Funktionen ausgebildet sind und dass darüber hinaus gehende, modulübergreifende Funktionen durch eine zusätzliche Steuereinheit ausgeübt werden, die in der Rückwandeinheit integriert oder an dieser gehalten ist.

3. Mikrofluidiksystem nach Anspruch 1 oder 2, **dadurch gekennzeichnet, dass** die Mikrofluidikeinheiten (6) im Bereich der Oberseite (5) der jeweiligen Module (1, 4) angeordnet sind und dass weitere mikrofluidische und/oder makrofluidische Einheiten (10) in den Modulen (1, 4) unterhalb der betreffenden Mikrofluidikeinheit (6) angeordnet und mit dieser fluidisch verbunden sind.

4. Mikrofluidiksystem nach einem der vorangehenden Ansprüche, **dadurch gekennzeichnet, dass** die Verbindungsteile (11) an den Modulen (1, 4) gehalten sind und dass die Mikrofluidikeinheiten (6) von außen gegen die Verbindungsteile montierbar sind.

5. Mikrofluidiksystem nach Anspruch 1, 2 oder 3, **dadurch gekennzeichnet, dass** die Mikrofluidikeinheiten (6) an den Modulen (1, 4) gehalten sind und dass die Verbindungsteile (11) von außen gegen die Mikrofluidikeinheiten (6) montierbar sind.

6. Mikrofluidiksystem nach Anspruch 4 oder5, **dadurch gekennzeichnet, dass** die Module (1, 4) betätigbare Verriegelungsteile (14) aufweisen, die im Verriegelungszustand die von außen montierbaren Mikrofluidikeinheiten (6) bzw. Verbindungsteile (11) gegen die an den Modulen (1, 4) gehaltenen Mikrofluidikeinheiten (6) bzw. Verbindungsteile (11) pressen.

7. Mikrofluidiksystem nach Anspruch 6, **dadurch gekennzeichnet, dass** die Verriegelungsteile als Deckelteile (43) ausgebildet sind, die in geschlossenem Zustand die von außen montierbaren Mikrofluidikeinheiten (6) bzw. Verbindungsteile (11) gegen die an den Modulen (1, 4) gehaltenen Mikrofluidikeinheiten (6) bzw. Verbindungsteile (11) pressen.

8. Mikrofluidiksystem nach einem der vorangehenden Ansprüche, **dadurch gekennzeichnet, dass** die Module (1, 4) über an ihren Rückseiten (3) und an der Rückwandeinheit (2) angeordnete fluidische Steckverbinderteile (28 bis 31) mit mindestens einer in der Rückwandeinheit (2) verlaufenden und mindestens ein Hilfsfluid führenden Fluidleitung (23, 24) verbindbar sind.

9. Mikrofluidiksystem nach einem der vorangehenden Ansprüche, **dadurch gekennzeichnet, dass** die Rückwandeinheit (2) in ihrem den Steuereinheiten (15) in den Modulen (1, 4) gegenüberliegenden Bereich Mittel (21) zur Zwangskühlung aufweist.

10. Mikrofluidiksystem nach einem der vorangehenden Ansprüche, **dadurch gekennzeichnet, dass** in den Modulen (1, 4) die jeweilige elektrische Steuereinheit (15) auf einen Wärmeleitkörper (16) montierbar ist, der mit einer Wärmeübertragungsfläche flächig an der Rückwandeinheit (2) anliegt.

11. Mikrofluidiksystem nach einem der vorangehenden Ansprüche, **dadurch gekennzeichnet, dass** die Rückseiten (3) der Module (1, 4) jeweils mindestens eine Ausnehmung (17) enthalten, die zusammen mit der Rückwandeinheit (2) einen nach außen abgedichteten Hohlraum (19) bildet, in dem die elektrischen Steckverbinderteile (26, 27) zu liegen kommen.

12. Mikrofluidiksystem nach Anspruch 11, **dadurch gekennzeichnet, dass** die elektrische Steuereinheit (15) in dem Hohlraum (19) angeordnet ist.

13. Mikrofluidiksystem nach Anspruch 11 oder12, **dadurch gekennzeichnet, dass** in der Rückwandeinheit (2) eine Fluidleitung (22) für ein Spülfluid verläuft und dass von dieser Fluidleitung (22) Abzweige (32) in die Hohlräume (19) führen.

14. Mikrofluidiksystem nach einem der vorangehenden Ansprüche, **dadurch gekennzeichnet, dass** die Module (1, 4) im oberen Bereich ihrer Rückseiten (3) Mittel (40) zum Einhängen der Module (1, 4) in eine Einhängvorrichtung (39) im oberen Bereich der Rückwandeinheit (2) aufweisen.

15. Mikrofluidiksystem nach Anspruch 14, **dadurch gekennzeichnet, dass** die Module (1, 4) im unteren Bereich ihrer Rückseiten (3) Mittel (41) zum Anpressen der Module (1, 4) mit ihren Rückseiten (3) gegen die Rückwandeinheit (2) aufweisen.

16. Mikrofluidiksystem nach einem der vorangehenden Ansprüche, **dadurch gekennzeichnet, dass** die Rückwandeinheit (2) aus Rückwandsegmenten (48, 49) zusammenfügbar ist, die an den Fügestellen Verbindungsanschlüsse (51, 52) für die in den Rückwandsegmenten (48, 49) enthaltenen Leitungsbussegmente (53) und gegebenenfalls Fluidleitungssegmente (54) aufweisen.

17. Mikrofluidiksystem nach einem der vorangehenden Ansprüche, **dadurch gekennzeichnet, dass** die Rückwandeinheit (2) auf ihrer von den Modulen (1, 4) abgewandten Seite Montageplätze (55) mit Anschlüssen zur Montage und zum Anschließen von Zusatzeinrichtungen (56) aufweist.

## Claims

1. Microfluidic system, consisting of modules (1, 4) arranged next to another in a row, each of which contains a microfluidic unit (6) and an associated electrical control unit (15) controlling module-specific functions in the microfluidic unit (6) and recording measured values,
- wherein the modules (1, 4) bear with their rear sides (3) against a common vertical rear wall unit (2) and are retained on the latter,
- wherein the microfluidic units (6) are embodied as planar microfluidic units (6),
- wherein the respective control unit (15) in the modules (1, 4) is arranged in the region of the rear side (3) and the microfluidic unit (6) is arranged in a region that is remote from the rear side (3),
- wherein the control units (15) are connected by way of electrical plug-in connector parts (26, 27) arranged on the rear sides (3) of the modules (1, 4) and on the rear wall unit (2) to an electrical line bus (20) running in the rear wall unit (2), and
- wherein the microfluidic units (6) in the different modules (1, 4) are located next to one another in a common plane with in each case one side containing fluid connections (8) and connecting parts (11) containing connection channels (12) bear against the microfluidic parts (6) in said plane, with two adjacent microfluidic parts (6) in each case being partially overlapped by one connecting part (11) in each case and the connecting part (11) connecting the fluid connections (8) of the adjacent microfluidic parts (6) lying in the overlap zone to one another via its connection channels (12).

2. Microfluidic system according to claim 1, **characterised in that** the control units (15) in the modules (1, 4) are embodied only for performing module-specific functions and **in that** more extensive, cross-module functions are performed by an additional control unit which is integrated in the rear wall unit or retained on the latter.

3. Microfluidic system according to claim 1 or 2, **characterised in that** the microfluidic units (6) are arranged in the region of the top side (5) of the respective modules (1, 4) and that further microfluidic and/or macrofluidic units (10) are arranged in the modules (1, 4) below the relevant microfluidic unit (6) and are fluidically connected to the latter.

4. Microfluidic system according to one of the preceding claims, **characterised in that** the connecting parts (11) are retained on the modules (1, 4) and **in that** the microfluidic units (6) can be mounted from outside against the connecting parts.

5. Microfluidic system according to claim 1, 2 or 3, **characterised in that** the microfluidic units (6) are retained on the modules (1, 4) and **in that** the connecting parts (11) can be mounted from outside against the microfluidic units (6).

6. Microfluidic system according to claim 4 or 5, **characterised in that** the modules (1, 4) have actuatable locking parts (14) which in the locking state press the externally mountable microfluidic units (6) or connecting parts (11) against the microfluidic units (6) or connecting parts (11) retained on the modules (1, 4).

7. Microfluidic system according to claim 6, **characterised in that** the locking parts are embodied as cover parts (43) which in the closed state press the externally mountable microfluidic units (6) or connecting parts (11) against the microfluidic units (6) or connecting parts (11) retained on the modules (1, 4).

8. Microfluidic system according to one of the preceding claims, **characterised in that** the modules (1, 4) can be connected by way of fluidic plug-in connector parts (28 to 31) arranged on their rear sides (3) and on the rear wall unit (2) to at least one fluid line (23, 24) running in the rear wall unit (2) and conducting at least one auxiliary fluid.

9. Microfluidic system according to one of the preceding claims, **characterised in that** in its section disposed opposite the control units (15) in the modules (1, 4) the rear wall unit (2) has means (21) for forced cooling.

10. Microfluidic system according to one of the preceding claims, **characterised in that** in the modules (1, 4) the respective electrical control unit (15) can be mounted onto a heat-conducting element (16) which bears with one heat transfer surface flat against the rear wall unit (2).

11. Microfluidic system according to one of the preceding claims, **characterised in that** the rear sides (3) of the modules (1, 4) each contain at least one recess (17) which together with the rear wall unit (2) forms a cavity (19) which is sealed off towards the outside and in which the electrical plug-in connector parts (26, 27) are accommodated.

12. Microfluidic system according to claim 11, **characterised in that** the electrical control unit (15) is arranged in the cavity (19).

13. Microfluidic system according to claim 11 or 12, **characterised in that** a fluid line (22) for a flushing fluid runs in the rear wall unit (2) and **in that** branches (32) lead from said fluid line (22) into the cavities (19).

14. Microfluidic system according to one of the preceding claims, **characterised in that** in the upper section of their rear sides (3) the modules (1, 4) have means (40) for mounting the modules (1, 4) into a mounting device (39) in the upper section of the rear wall unit (2).

15. Microfluidic system according to claim 14, **characterised in that** in the lower section of their rear sides (3) the modules (1, 4) have means (41) for pressing the modules (1, 4) with their rear sides (3) against the rear wall unit (2).

16. Microfluidic system according to one of the preceding claims, **characterised in that** the rear wall unit (2) can be assembled from rear wall segments (48, 49) which have connecting terminals (51, 52) at the joints for the line bus segments (53) and if necessary fluid line segments (54) contained in the rear wall segments (48, 49).

17. Microfluidic system according to one of the preceding claims, **characterised in that** on its side facing away from the modules (1, 4) the rear wall unit (2) has mounting locations (55) with terminals for installing and connecting add-on devices.

## Revendications

1. Système microfluidique constitué de modules (1, 4), qui sont disposés les uns à côté des autres suivant une rangée et qui contiennent respectivement une unité (6) microfluidique et une unité (15) électrique de commande associée commandant des fonctions spécifiques aux modules dans l'unité (6) microfluidique et détectant des valeurs de mesure,
- dans lequel les modules (1, 4) s'appliquent, par leur côté (3) arrière, à une unité (2) de paroi arrière commune verticale et y sont maintenus,
- dans lequel les unités microfluidiques sont constituées sous la forme de parties microfluidiques planes,
- dans lequel, dans les modules (1 à 4), l'unité (15) respective de commande est disposée dans la zone du côté (3) arrière et l'unité (6) microfluidique est disposée dans une zone éloignée du côté (3) arrière,
- dans lequel les unités (15) de commande sont reliées à un bus (20) de conduction électrique s'étendant dans l'unité (2) de paroi arrière par des parties (26 27) de connecteur électrique à enfichage disposées sur les côtés (3) arrière des modules (1 à 4) et sur l'unité (2) de paroi arrière, et
- dans lequel les unités (6) microfluidiques sont côte à côte dans un plan commun dans les modules (1 à 4) différents ayant respectivement un côté contenant des raccords (8) pour du fluide et des parties (11) de liaison contenant des canaux (12) de liaison s'appliquent dans ce plan aux parties (6) microfluidiques respectivement, deux parties (6) microfluidiques voisines étant chevauchées, en partie respectivement, par une partie (11) de liaison et la partie (11) de liaison relie entre les raccords (8) pour du fluide, se trouvant dans la zone de chevauchement, des parties (6) microfluidiques voisines par ses canaux (12) de liaison.

2. Système microfluidique suivant la revendication 1, **caractérisé en ce que** les unités (15) de commande dans les modules (1, 4) ne sont formées que pour exercer des fonctions spécifiques aux modules et **en ce que** des fonctions allant au-delà et empiétant du module sont exercées par une unité de commande supplémentaire, qui est intégrée à l'unité de paroi arrière ou qui y est maintenue.

3. Système microfluidique suivant la revendication 1 ou 2, **caractérisé en ce que** les unités (6) microfluidiques sont disposées dans la zone du côté (5) supérieure des modules (1, 4) respectifs et **en ce que** d'autres unités (10) microfluidiques et/ou macrofluidiques sont disposées dans les modules (1, 4) en dessous de l'unité (6) microfluidique concernée et communiquant fluidiquement avec celle-ci.

4. Système microfluidique suivant l'une des revendications précédentes, **caractérisé en ce que** les parties (11) de liaison sont maintenues sur les modules (1, 4) et **en ce que** les unités (6) microfluidiques peuvent être montées de l'extérieur sur les parties de liaison.

5. Système microfluidique suivant les revendications 1, 2 ou 3, **caractérisé en ce que** les unités (6) microfluidiques sont maintenues sur les modules (1, 4) et **en ce que** les parties (11) de liaison peuvent être montées de l'extérieur sur les unités (6) microfluidiques.

6. Système microfluidique suivant la revendication 4 ou 5, **caractérisé en ce que** les modules (1, 4) ont des parties de verrouillage qui peuvent être actionnées et qui, dans l'état de verrouillage, pressent les unités (6) microfluidiques pouvant être montées de l'extérieur ou les parties (11) de liaison sur les unités (6) microfluidiques ou les parties (11) de liaison maintenues sur les modules (1, 4).

7. Système microfluidique suivant la revendication 6, **caractérisé en ce que** les parties de verrouillage sont constituées en partie (43) de couvercle qui, à l'état fermé, pressent les unités (6) microfluidiques pouvant être montées de l'extérieur ou les parties (11) de liaison sur les unités (6) microfluidiques ou les parties (11) de liaison maintenues sur les modules (1, 4).

8. Système microfluidique suivant l'une des revendications précédentes, **caractérisé en ce que** les modules (1, 4) peuvent être reliés par des parties (28 à 31) fludiques de connecteur à enfichage, disposées sur les côtés (3) arrière des modules et sur l'unité (2) de paroi arrière et ayant au moins un conduit (23, 24) pour du fluide, qui s'étendent dans l'unité (2) de paroi arrière et dans lequel passe au moins un fluide auxiliaire.

9. Système microfluidique suivant l'une des revendications précédentes, **caractérisé en ce que** l'unité (2) de paroi arrière a, dans sa partie opposée aux unités (15) de commande, des modules (1, 4), des moyens (21) de refroidissement forcés.

10. Système microfluidique suivant l'une des revendications précédentes, **caractérisé en ce que** dans les modules (1, 4) l'unité (15) électrique de commande respective peut être montée sur un corps (16) de conduction de la chaleur, qui s'applique à plat à l'unité (2) de paroi arrière par une surface de transmission de la chaleur.

11. Système microfluidique suivant l'une des revendications précédentes, **caractérisé en ce que** les côtés (3) arrières des modules (1, 4) comportent, respectivement, au moins un évidement (17) qui, ensemble avec l'unité (2) de paroi arrière, forme une cavité (19) qui est rendue étanche vis-à-vis de l'extérieur et dans laquelle viennent s'appliquer les parties (26, 27) électriques de connecteur à enfichage.

12. Système microfluidique suivant la revendication 11, **caractérisé en ce que** l'unité (15) électrique de commande est disposée dans la cavité (19).

13. Système microfluidique suivant la revendication 11 ou 12, **caractérisé en ce qu'**un conduit (22) pour un fluide de lavage s'étend dans l'unité (2) de paroi arrière et **en ce que** des dérivations (32) partent de ce conduit (22) pour du fluide dans les cavités (19).

14. Système microfluidique suivant l'une des revendications précédentes, **caractérisé en ce que** les modules (1, 4) ont, dans la zone supérieure de leur côté (3) arrière, des moyens de suspension des modules (1, 4) dans un dispositif (39) de suspension de la zone supérieure de l'unité (2) de paroi arrière.

15. Système microfluidique suivant la revendication 14, **caractérisé en ce que** les modules ont, dans la zone intérieure de leur côté (3) arrière, des moyens pour presser les modules (1, 4) par leur côté (3) arrière sur l'unité (2) de paroi arrière.

16. Système microfluidiques suivant l'une des revendications précédentes, **caractérisé en ce que** l'unité (2) de paroi arrière peut être constituée par l'assemblage de segments (48, 49) de paroi arrière qui ont, sur les points d'assemblage, des raccords (51, 52) de liaison pour les segments (53) de bus de conduction contenus dans les segments (48, 49) de paroi arrière et, le cas échéant, pour des segments (54) de conduit pour du fluide.

17. Système microfluidiques suivant l'une des revendications précédentes, **caractérisé en ce que** l'unité (2) de paroi arrière a, du côté éloigné des modules (1, 4) des emplacements (55) de montage ayant des raccords pour le montage et le raccordement de dispositifs (56) supplémentaires.
